(19) Europäisches Patentamt
European Patent Office
Office européen des brevets

(11) **EP 4 314 154 B1**

(12) **EUROPEAN PATENT SPECIFICATION**


(45) Date of publication and mention of the grant of the patent:
**23.04.2025 Bulletin 2025/17**

(21) Application number: **22715412.7**

(22) Date of filing: **23.03.2022**

(51) International Patent Classification (IPC):
***C08L 43/02** (2006.01)* ***G01N 33/543** (2006.01)*
***C09D 143/02** (2006.01)*

(52) Cooperative Patent Classification (CPC):
(C-Sets available)
**C08F 120/28; C08G 81/021; C08J 3/246;**
**C08L 43/02; C08L 101/14; C09D 143/02;**
C08J 2333/02; C08J 2343/02 (Cont.)

(86) International application number:
**PCT/SG2022/050158**

(87) International publication number:
**WO 2022/203603 (29.09.2022 Gazette 2022/39)**


(54) **WATER-SOLUBLE POLYMER TO PREVENT NON-SPECIFIC ADSORPTION**

WASSERLÖSLICHES POLYMER ZUR VERHINDERUNG VON NICHTSPEZIFISCHER ADSORPTION

POLYMÈRE HYDROSOLUBLE POUR EMPÊCHER UNE ADSORPTION NON SPÉCIFIQUE


(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.03.2021 SG 10202103164U**

(43) Date of publication of application:
**07.02.2024 Bulletin 2024/06**



(73) Proprietor: **N-Lab Technology Center Pte. Ltd.**
**Singapore 609917 (SG)**

(72) Inventor: **WANG, Honglei**
**Singapore 609917 (SG)**

(74) Representative: **Marks & Clerk LLP**
**15 Fetter Lane**
**London EC4A 1BW (GB)**



(56) References cited:
**EP-A1- 3 467 059** **JP-A- 2006 176 720**
**JP-A- H0 783 923**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 43/02, C08L 33/02;**
**C09D 143/02, C08L 33/02;**
C08F 212/08, C08F 212/36, C08F 220/20, C08F 220/56;
C08F 220/20, C08F 230/02, C08F 220/34

## Description

### BRIEF DESCRIPTION OF THE BACKGROUND ART

Immunoassays are useful for discovering, detecting, and monitoring biological processes which express a distinctive proteomic "biomarker" signature by utilizing specific chemical interactions between antibodies and antigens. Immunoassays are becoming more important as both medical and research tools, and also in various scientific fields such as analytical chemistry, pharmacology, molecular cell biology, and clinical biochemistry. Immunoassays are now used in many laboratories worldwide, and many companies are marketing diagnostic or detection tools that employ immunoassays to determine the levels of specific analytes of interest, such as pollutants, hormones, disease markers, and pathogens.

However, immunoassays often suffer from low signal-to-noise (S/N) ratios at the early-stage of detection where the biomarker's concentration level is relatively low. A high sensitivity test is needed because a low S/N ratio gives rise to poor assay confidence, resulting in false positive or false negative results. This could arise from the high background noise caused by the nonspecific adsorption of both target and non-target molecules onto the assay platform. As a result, background noise increases and obstructs improvement of sensitivity. Among the different immunoassay techniques, chemiluminescence provides the highest detection limit as compared to colour change or fluorescence. However, the S/N of chemiluminescence immunoassays still needs to be further improved.

In the chemiluminescence immunoassay (CLIA), a potential cause of high noise level is the nonspecific adsorption of secondary antibodies which conjugate with the signal generators, such as antibodies labelled with acridinium esters or isoluminol derivates, alkaline phosphates and horseradish peroxidase. In the case of diagnosis in clinical samples, a specific substance such as an antigen is detected in the coexisting living body molecules. Substances such as serums and the like, which coexist in the living body molecules, tend to adsorb on the surface of particles. They can then render the surface to be more prone to non-specific adsorption of the secondary antibody labelled with signal generators. As a result, the noise increases and obstructs improvement of S/N ratios.

A general approach to improving S/N ratios of CLIA is to prevent nonspecific adsorption by using organism-derived substances such as albumin, casein, gelatin and the like as additive agents. However, even after using these additive agents, nonspecific adsorption remains.

Furthermore, these biological additives often have huge batch to batch variation. For example, one batch of albumin may provide good results, but a subsequent batch may not work at all. There will be plenty of trial-and-error to pick out the workable batches. In addition, when using a living body-derived additive agent, organism pollution can be a problem. Furthermore, the prevention of nonspecific adsorption by these additive agents is hindered by washing with acid or alkali, surfactant aqueous solution and the like, and shows inferior durability. Efforts were made by using synthetic materials to passivate the surface. Examples of synthetic polymers prepared with the aim of preventing nonspecific adsorption include polyoxy ethylene (JP-A-5-103831, JP-A-2006 177914 and JP-A-2006-299045), and copolymers having a phosphorylcholine group (JP-A-2006-176720 and JP-A-2006-258585). However, their nonspecific adsorption preventive effect was insufficient. The possible reasons are (1) the structure of the copolymer is usually linear, so it may be difficult to achieve high coverage by using linear polymer; (2) the molecular weight of such block copolymer is usually low, so it may be difficult to achieve a thick coating layer on the target surface.

JP H07 83923 A discloses a protein adsorption inhibitor containing 2-methacryloyloxyethylphosphorylcholine (MPC) polymer and/or copolymer of MPC-containing constituent. JP H07 83923 A discloses that the protein adsorption inhibitor suppresses the adsorption of protein to an antibody combination solid phase, an antigen combination solid phase, or a solid phase.

EP3467059A1 discloses a coating agent for preventing the adsorption of extracellular vesicles represented by exosomes to a tool. EP3467059A1 discloses that adsorption of extracellular vesicles to a tool can be prevented by using a coating agent which contains a hydrophilic polymer having a weight average molecular weight of 10,000 or more and 1,000,000 or less, wherein a coated layer formed by the coating agent has a contact angle of 0 degree or more and 30 degrees or less.

Other polymers include aminodextrans and modified dextrans of various molecular weights (EP2230515A1). These polymers may be able to prevent non-specific adsorption against proteins and bio-substances having negative charge, but are not as effective against those showing having positive charge. Since biological samples are usually a mixture of antigens and antibodies, they may have biomolecules with various different charges in the same sample, and so these polymers may not be useful against many biological samples.

There is therefore an unmet need for a polymers that are able to prevent non-specific adsorption to a complex mixture.

## SUMMARY OF THE INVENTION

The inventors have surprisingly found that by conjugating a polymer as defined herein onto the surface of a substrate, non-specific adsorption of biological molecules/material can be minimised. This may advantageously minimise background binding, improving the signal to noise ratio in an assay and leading to more accurate and reliable detection.

## BRIEF DESCRIPTION OF THE DRAWINGS

Figure 1 depicts protein adsorption on different type of beads

## DETAILED DESCRIPTION OF THE INVENTION

It has been surprisingly found that the problems above can be solved in whole or in part by the use of a water-soluble crosslinked copolymer as defined in the appending claims.

Biological samples are usually a complex mixture of lipids, antigens and antibodies. Since they may have totally opposite charge in the same environment, it is important that a surface inhibits non-specific adsorption of a complex mixture. For example, the isoelectric point of Beta-HCG is 6.2-6.6 while the isoelectric point of Thyrotropin receptor (TSHR) is 8-10. This means under neutral pH, Beta-HCG is positively charged and Thyrotropin receptor (TSHR) is negatively charged. An ideal surface preventing non-specific adsorption of bio-substances should not adsorb any of them under the same buffer pH. It has surprisingly been found that by conjugating the polymer of the invention on the surface of a substrate, the non-specific adsorption can be minimised. It is believed that chemiluminescence immunoassays utilising this coating will improve the signal to noise ratio and minimise background binding, leading to accurate and reliable detection. As will be appreciated by a person skilled in the art, the polymer of the invention may be useful in coatings for other materials, where non-specific adsorption (e.g. of biomolecules such as proteins) is desired.

In embodiments herein, the word "comprising" may be interpreted as requiring the features mentioned, but not limiting the presence of other features. Alternatively, the word "comprising" may also relate to the situation where only the components/features listed are intended to be present (e.g., the word "comprising" may be replaced by the phrases "consists of" or "consists essentially of"). It is explicitly contemplated that both the broader and narrower interpretations can be applied to all aspects and embodiments of the present invention. In other words, the word "comprising" and synonyms thereof may be replaced by the phrase "consisting of" or the phrase "consists essentially of" or synonyms thereof and *vice versa*.

In embodiments herein, various features may be described in the singular or the plural. It is herein explicitly contemplated that references to the singular are to be understood as including the plural, and references to the plural are to be understood as including the singular, unless such an interpretation would be technically illogical.

The water-soluble crosslinked copolymer of the invention may be referred to herein as the polymer (of the invention), the copolymer (of the invention), the water-soluble copolymer (of the invention), the water-soluble polymer (of the invention), or the like.

Some of the advantages of the water-soluble crosslinked copolymer and the relevant methods to realise the surface preventing non-specific adsorption of bio-substances on substrates include the following.

- The water-soluble crosslinked copolymers only utilise the most common bioconjugation reaction mechanism to conjugate on the surface of the substrate. Such conditions are mild and will not impact the configurations of ligands, such as antibodies, streptavidin etc.
- The water-soluble crosslinked copolymer is a good replacement of the organism-derived substances, such as albumin, casein, gelatin and the like as additive agents. By using water-soluble crosslinked copolymer as an additive, the risk of organism pollution can be mitigated.
- Different from conventional methods, in which the additives such as albumin, casein, gelatin and the like are only attached on the substrate surface through physical adsorption, the water-soluble crosslinked copolymer is covalently bonded on the surface. It shows durability during repeatedly washing with surfactant buffer solution.
- The water-soluble crosslinked copolymers exhibit excellent performance under a wide pH range and it also shows resistance to proteins with different isoelectric points.
- The water-soluble crosslinked copolymers help to improve the signal to noise ratio in chemiluminescence immunoassays and minimise background binding, leading to accurate and reliable detection and higher purification yield

The water-soluble copolymers are useful for preventing non-specific adsorption of a substance including lipids, proteins, saccharides or nucleic acids, and cells. According to the present invention, the water-soluble copolymer may be formed by crosslinking a first polymer chain to a second polymer chain comprising a polycarboxylic acid, wherein

the first chain before crosslinking comprises a constitutional unit (a) comprising a zwitterionic phosphorylcholine group, a constitutional unit (b) comprising an amine group (e.g. a primary amine group) and a constitutional unit (c) comprising a hydroxyl group; and

the water-soluble crosslinked copolymer comprises one or more crosslinks formed between carboxylic acid groups in the second chain and (primary) amine groups in the first chain.

The water-soluble crosslinked polymer of the invention may be a water-soluble crosslinked copolymer comprising:

a first chain comprising a constitutional unit (A') and/or (A"), a constitutional unit (B) and a constitutional unit (C), and a second chain comprising a constitutional unit (D),

wherein the water-soluble crosslinked copolymer comprises one or more crosslinks between the first chain and the second chain:

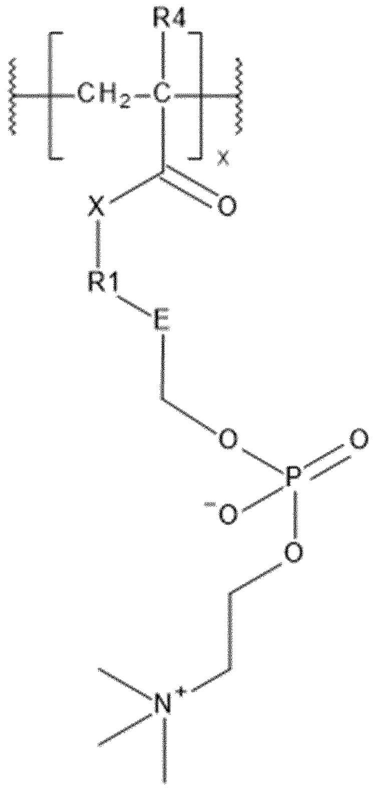

(A')

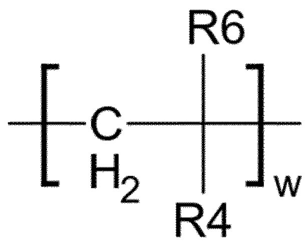

(B)

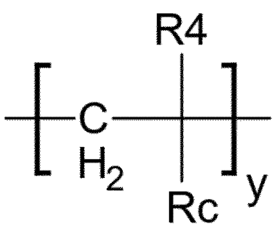

(C)

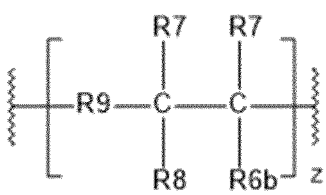

(D)

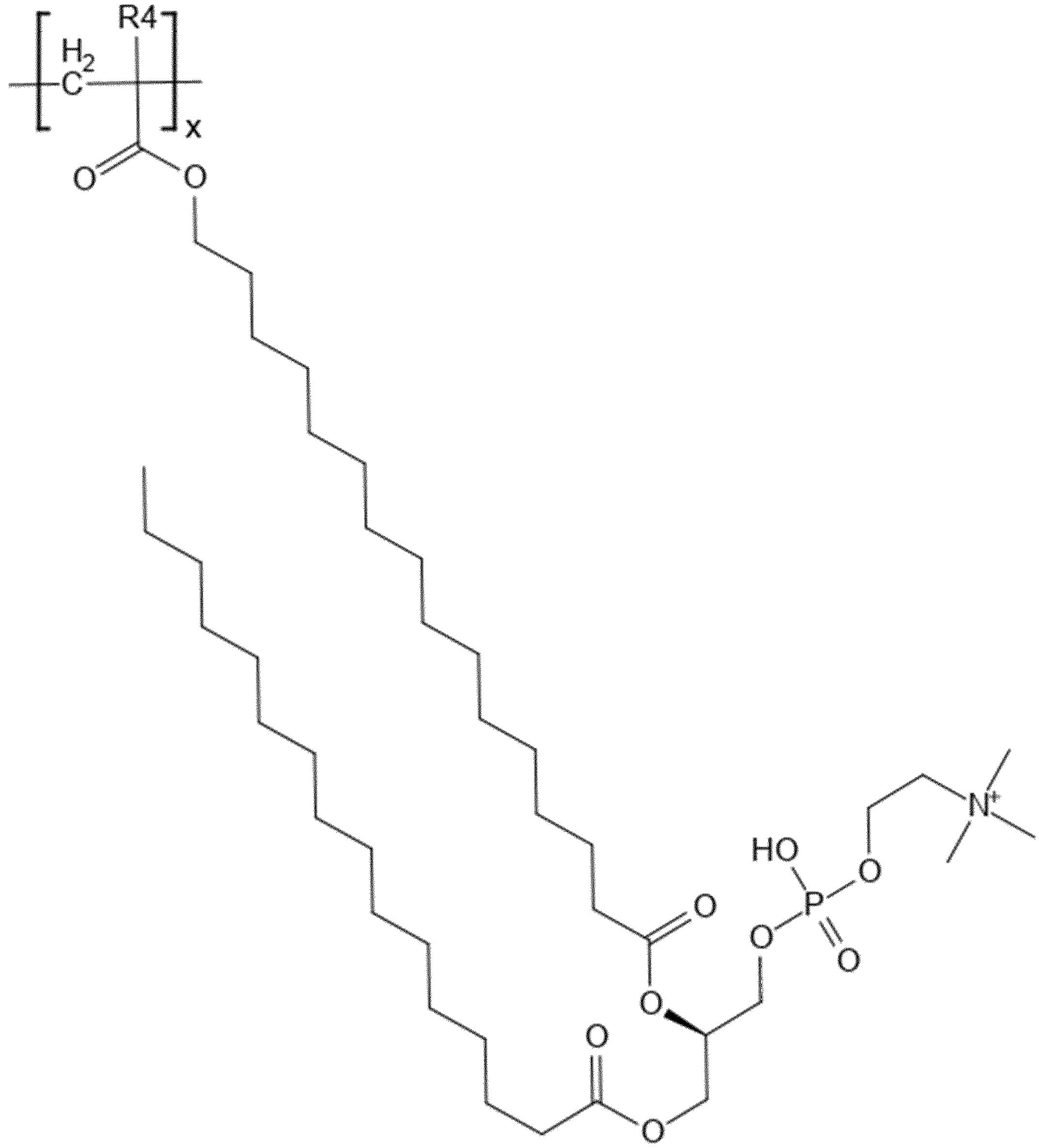

(A'')

wherein:

X represents O or NH;
R1 represents a linear or branched alkylene group having from 1 to 5 carbon atoms;
E represents a covalent bond, -C(O)O-, -OC(O)-, -NHC(O)- or -C(O)NH-;
Rc represents a hydroxyl-containing group;
each R4 independently represents a methyl group or a hydrogen atom;
R6 represents a moiety comprising an amine group (e.g. a primary amine group) and R6b represents -COOH or -C(O)O-Y-COOH, where Y represents a $C_{1-5}$ alkylene group, provided that at least one R6 in the first chain is covalently connected to an R6b in the second chain *via* an amide bond formed between a (primary) amine group in said R6 and a carboxylic acid in said R6b;
each R7 is independently selected from the group consisting of a hydrogen atom, a methyl group, an ethyl group, a n-propyl group, an isopropyl group, a methoxyethyl group, a hydroxymethyl group, and a hydroxyethyl group;
R8 represents a carboxyl group or a hydrogen atom;
R9 represents a covalent bond, a linear or branched alkylene having from 1 to 10 carbon atoms, or a linear alkylene having from 1 to 5 carbon atoms having from 1 to 3 substituents selected from the group consisting of a methoxy group, a hydroxymethyl group, a hydroxyethyl group and a methoxyethyl group;

w, x, y, z are independently of each other, an integer of from 1 to 50.

The weight average molecular weight of the water-soluble crosslinked copolymer of the invention is from 2,000 to 1,000,000 Daltons, preferably 5,000 to 500,000 Daltons, more preferably from 10,000 to 250,000 Daltons. When the weight average molecular weight of the water-soluble copolymer is lower than 2,000 Daltons, the effect of preventing non-specific adsorption of bio-substances becomes negligible. On the other hand, when the weight average molecular weight of the water-soluble copolymer is higher than 1,000,000 Daltons, it will become infeasible to prepare a solution due to the increased viscosity of the polymer solution.

The first chain of the water-soluble crosslinked polymer may be a random copolymer comprising constitutional unit (A') and/or (A"), constitutional unit (B) and constitutional unit (C). For example, in some embodiments the first chain of the water-soluble crosslinked polymer may be a random copolymer comprising constitutional unit (A'), constitutional unit (B) and constitutional unit (C). In some embodiments, the first chain of the water-soluble crosslinked polymer may be a random copolymer comprising constitutional unit (A"), constitutional unit (B) and constitutional unit (C).

The proportion of carboxylic acid groups in the second chain that are crosslinked to amine groups in the first chain may be from 5% to 75%, for example from 10% to 50%.

In some embodiments, the first chain comprises a constitutional unit (A') where X is O, R1 is methylene and E is a covalent bond. In some embodiments the first chain comprises a constitutional unit (A").

In some embodiments, constitutional unit (B) represents a constitutional unit formed from the polymerisation of one of the group consisting of allylamine hydrochloride, 4-vinylaniline, 2-aminoethyl methacrylate hydrochloride, 2-aminoethyl acrylate, amino acrylate, N-(2-aminoethyl) methacrylamide hydrochloride, N-(3-aminopropyl)methacrylamide hydrochloride, and 2-aminoethyl methacrylate phenothiazine.

In some embodiments, constitutional unit (B) represents a constitutional unit formed from the polymerisation of one of the group consisting of allylamine hydrochloride, 2-aminoethyl methacrylate hydrochloride, 2-aminoethyl acrylate, amino acrylate, N-(2-aminoethyl) methacrylamide hydrochloride, N-(3-aminopropyl)methacrylamide hydrochloride, and 2-aminoethyl methacrylate phenothiazine (e.g. N-(2-aminoethyl) methacrylamide hydrochloride).

In some embodiments, constitutional unit (B) represents a constitutional unit formed from the polymerisation of one of the group consisting of allylamine hydrochloride, 2-aminoethyl methacrylate hydrochloride, 2-aminoethyl acrylate, N-(2-aminoethyl) methacrylamide hydrochloride, and N-(3-aminopropyl)methacrylamide hydrochloride.

In some embodiments, constitutional unit (B) represents a constitutional unit formed from the polymerisation of allylamine hydrochloride.

In some embodiments, constitutional unit (B) is a constitutional unit as defined above that comprises a primary amine group.

In some embodiments, constitutional unit (B) has the formula

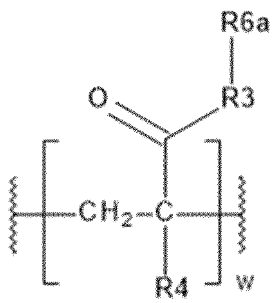

,

wherein

R3 represents O or NH, R4 is as defined above, and R6a represents $-Y-CH_2-NH_2$ or $-Z-NH_2$, where Y represents a $C_{1-5}$ alkylene group (e.g. a $C_{1-3}$ alkylene group) and Z represents a $C_{6-12}$ aryl group.

In embodiments, R6a represents $-Y-CH_2-NH_2$, such that R6a comprises a primary amine. In some embodiments Y represents a $C_{1-3}$ alkylene group.

In some embodiments constitutional unit (C) has the formula

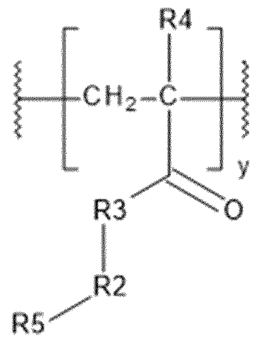

wherein

R2 represents a linear or branched alkylene group having from 1 to 18 carbon atoms, a polyoxyalkylene group with a unit number of from 1 to 20, or an arylene group having from 6 to 18 carbon atoms,
R3 represents O or NH;
R4 is as defined above;
R5 represents $C_nH_{2n-m+1}(OH)_m$, where n represents an integer of from 1 to 5, and m is 1, 2 or 3.

In some embodiments R2 represents an ethylene glycol or a propylene glycol having from 1 to 20 repeating units. In some embodiments R2 represents a linear or branched alkylene group having from 1 to 5 carbon atoms.
In some embodiments, R2 represents a polyoxyalkylene group (e.g. ethylene glycol or propylene glycol) with a unit number of from 1 to 20, such as a unit number of from 3 to 10.
In some embodiments m is 1. In some embodiments n is 1, 2 or 3, such as 1 or 2.
In some embodiments constitutional unit (C) is a constitutional unit formed from the polymerisation of one of the group consisting of 2-hydroxyethyl methacrylate, 2-hydroxyethyl acrylate, hydroxypolyethoxy (10) Allyl Ether, N-(2-hydroxypropyl)methacrylamide, glycerol monomethacrylate, 3-phenoxy 2 hydroxy propyl methacrylate, hydroxypropyl methacrylate, 4-hydroxybutyl acrylate, 2-hydroxypropyl acrylate, N-hydroxyethyl acrylamide, poly(ethylene glycol) methacrylate, poly(propylene glycol) methacrylate, and N-[tris(hydroxymethyl)methyl]acrylamide (e.g. 2-hydroxyethyl methacrylate).
In some embodiments, constitutional unit (C) is a constitutional unit formed from the polymerisation of one of the group consisting of hydroxypolyethoxy (10) Allyl Ether and poly(ethylene glycol) methacrylate, poly(propylene glycol) methacrylate.
In some embodiments the weight average molecular weight of the first chain is from 500 to 100,000 Daltons, preferably from 2,000 Daltons to 50,000 Daltons.
In some embodiments constitutional unit (D) is a constitutional unit formed from the polymerisation of one of the group consisting of poly(acrylic acid), polymethacrylic acid, polystyrene-block-poly(acrylic acid), polymaleic acid, poly(acrylic acid-co-maleic acid), poly(D,L-lactide-block-acrylic acid), poly(acrylamide-co-acrylic acid), poly(N-isopropylacrylamide-co-acrylic acid), and poly(ethylene-co-acrylic acid), such as a constitutional unit formed from the polymerisation of one of the group consisting of acrylic acid, methacrylic acid and 2-carboxyethyl acrylate.
In some embodiments the weight average molecular weight of the second chain is from 2,000 to 700,000 Daltons, preferably 5,000 to 350,000 Daltons, more preferably from 10,000 to 250,000 Daltons.
The invention also provides a method for the preparation of the water-soluble crosslinked copolymer of the invention, comprising the steps:

(a) mixing a monomer corresponding to constitutional unit (1), a monomer corresponding to constitutional unit (2), and a monomer corresponding to constitutional unit (3) in a solvent (e.g. water);
(b1) polymerising the monomer mixture, optionally by adding an initiator and heating to a temperature of from 55 to 90°C for 5 to 24 hours; and
(c1) conjugating the polymer obtained in step (b1) to a polycarboxylic acid to form the water-soluble crosslinked copolymer, optionally in the presence of a buffer having a pH from 4.5 to 8.5.

The method may further comprise a step (d):
(d) conjugating the water-soluble crosslinked copolymer obtained in step (c1) to a substrate.
Alternatively, immobilisation on a substrate may be performed before the water-soluble crosslinked copolymer is fully synthesised. For example, the method may further comprise a step (b2) or (c0):

(b2) conjugating the polymer obtained in step (b1) to a substrate before step (c1); or
(c0) conjugating the polycarboxylic acid in step (c1) to a substrate before conjugating the polymer obtained in step (b1) to the polycarboxylic acid.

More specific methods for preparing the copolymers of the invention are provided below.

(a) mix the monomers in a solvent, for example water;
(b) start polymerisation by adding an initiator under desired temperature typically between 55 and 90°C;
(c) continue reaction under heating for 5 - 24 hours;
(d) purify the reactant mixture by re-precipitation, extraction, dialysis and the like;
(e) conjugate the polymer obtained in step (d) (terpolymer) to a polyacid backbone in buffer, eg. buffer with pH 4.5-8.5 through carbodiimide coupling mechanism and the like.
(f) remove the unreacted terpolymer through dialysis or column and the like.

Optionally, the terpolymer can be used to conjugate to the polyacid backbone which has been coated on a substrate, then step (f) is not required.

The substrate may be selected from particles, hollow filters, plastic tubes, glass fibers, glass slides, microplates and microfluidic devices, (e.g. wherein the substrate is selected from particles, hollow filters, microplates and microfluidic devices, such as particles, hollow filters, and microfluidic devices).

The material of the substrate may be selected from at least one of the following polymeric, organic or composite materials, such as polyurethanes, polyacrylonitriles, polymethacrylate, carbon fibers, cellulosic materials, polyacrylamide, polyacrylate, polyolefins, poly(4-methylbutene, polystyrene, poly(ethylene terephthalate), polysiloxanes, nylon, poly(vinyl butyrate), ferromagnetic materials, silica, or mixtures or composites of any of the above.

The abovementioned substrate may be further functionalised with anchoring groups, which can further react with the water-soluble copolymer in the present embodiment, selected from primary amine, epoxide group, tosyl group and aldehyde group.

The water-soluble copolymer in the present invention may be conjugated on a substrate by (1) dissolving water-soluble branched copolymer in the buffer with pH 4.5-8.5, (2) activating the water-soluble branched copolymer, (3) mixing the water- soluble branched copolymer with the substrate after activation; (4) wash off the unbonded water- soluble branched copolymer.

Optionally, the water-soluble copolymer in the present embodiment may be conjugated on a substrate by (1) dissolving the terpolymer in the buffer with pH 4.5-8.5; (2) activating the substrate surface and (3) mixing the substrate with the terpolymer solution; (4) wash off the unbonded water- soluble branched copolymer.

Optionally, the water-soluble copolymer in the present embodiment may be conjugated on a substrate by (1) dissolving water-soluble branched copolymer in the buffer with pH 4.5-8.5, (2) mixing with the substrate with functional groups selected from epoxide group, tosyl group and aldehyde group.

## Examples

### Materials and Equipment:

The materials were purchased from the sources as provided below.

Styrene: Tokyo Chemical Industry (TCI), stabilized with TBC (4-tert-butylcatechol), >99.0%(GC).
Azobisisobutyronitrile (AIBN): Sigma-Aldrich (12 wt% in acetone).
Sodium persulfate ($Na_2S_2O_8$, SPS): Alfa Aesar, crystalline, 98%.
Polyvinylpyrrolidone (PVP, K30, MW=40,000): TCI, total nitrogen 12.0% to 12.8% (calcd.on anhydrous substance); water max. 7.0 %, K value 26.0 to 34.0.
Divinylbenzene (DVB, m- and p- mixture): TCI, 50.0%(GC) (contains ethylvinylbenzene, diethylbenzene) (stabilized with 4-tert-butylcatechol).
2-hydroxyethyl methacrylate: Sigma-Aldrich, ≥99.0%
2-carboxyethyl acrylate oligomers: Sigma-Aldrich, 2000 ppm MEHQ as inhibitor.
N-hydroxysuccinimide (NHS), >98%, TCI
Ethanol: 99%, Aik Moh
Acrylamide Monomer (ca. 50% in Water), TCI
1-(3-Dimethylaminopropyl)-3-ethylcarbodiimide hydrochloride (EDC), >98%, TCI
Deionized (DI) water: obtained from ELGA Ultrapure Water Treatment Systems (PURELAB Option).
10X Phospahte Buffered Saline, Sigma-Aldrich

MES Hydrate, >99.5%, Sigma-Aldrich
Amine-PEG-Carboxylic acid hydrochloride, Polysciences, Inc
2-(methacryloyloxy)ethyl dimethyl-(3-sulfopropyl)ammonium hydroxide, Sigma-Aldrich 2-Methacryloyloxyethyl-phosphorylcholine, Sigma-Aldrich
Bovine serum albumin, Sigma-Aldrich
Lysozyme, Sigma-Aldrich
Mechanical stirrer: Wiggens, WB2000-M overhead stirrer.
Classic Tube Roller: SCILOGEX MX-T6-S

Mechanical stirring (200 rpm) was used for all the polymerization processes. Prior to use, DI water and ethanol were bubbled with nitrogen for 20 min to remove oxygen. All the chemicals were used as received without purification. All the polymerizations and reactions were carried out under the protection of nitrogen using standard Schlenk line techniques.

**Example 1**

Synthesis of terpolymer

To a 100 mL three-necked round bottom glass reactor equipped with a mechanical stirrer, 50 g of water, 0.5 g of 2-Methacryloyloxyethyl-phosphorylcholine as the monomer (1), 0.01 g of N-(2-aminoethyl) methacrylamide hydrochloride as the monomer (2), 1 g of 2-hydroxyethyl methacrylate as the monomer (3) were added and nitrogen was introduced from one side-neck to remove oxygen. After 10 minutes of nitrogen flow, the glass reactor was heated up to 75 °C. 5mg of sodium persulfate as initiator was added after the temperature of the glass reactor was stable at 75 °C. The mixture was mixed for 24 hours to allow polymerization complete. The obtained solution was purified by dialysis.

**Example 2**

Synthesis of polyacid backbone

To a 100 mL three-necked round bottom glass reactor equipped with a mechanical stirrer, 50 g of water and 1 g of 2-carboxyethyl acrylate as the monomer (4) were added into the glass reactor and nitrogen was introduced from one side-neck to remove oxygen. After 10 minutes of nitrogen flow, the glass reactor was heated up to 75 °C. 5mg of sodium persulfate as initiator was added after the temperature of glass reactor was stable at 75 °C. The mixture was mixed for 24 h to allow polymerization complete. The obtained polycarboxylic acid solution was purified by dialysis with MES buffer.

**Example 3**

Water-soluble copolymer preparation

EDC and NHS were dissolved separately in 25mM MES buffer to achieve concentration 50mg/mL. 20μl of EDC solution was added per 1mg of polycarboxylic acid backbone and followed by 20 μl of NHS solution. The solution was mixed for 30 min before adding into terpolymer solution with the ratio of 25 mg of terpolymer per 1 mg of polycarboxylic acid. The mixture was mixed for another 2h. The obtained water-soluble copolymer solution was purified by dialysis.

**Example 4**

Water-soluble copolymer conjugation to a microsphere surface with primary amine moieties on the surface

To a 250 mL three-necked round bottom glass reactor equipped with a mechanical stirrer, AIBN solution (2 g, 12 wt% in acetone) was added and nitrogen was introduced from one side-neck to remove acetone solvent. After 10 minutes of nitrogen flow, dried AIBN powder was observed at the bottom of the reactor. Then PVP (0.2 g), ethanol (80 mL), and DI water (20 mL) were added. The mixture was stirred at room temperature for 5 minutes to obtain a clear solution, which was then heated to 60 °C with an oil bath, followed by addition of styrene (7.5 mL). A white colloidal solution was generated after 4 hours, indicating polymerization of styrene. A solution of DVB (3 mL DVB in 7 mL ethanol) was then slowly added with a constant pressure dropping funnel over 30 minutes. After addition of DVB solution was completed, the reaction (cross-linking polymerization) was continued for 3 hours. Then a monomer solution of 2-hydroxyethyl methacrylate (0.75 g in 5 mL ethanol) and acrylamide monomers (0.75 g in 5 mL ethanol, neutralized with ammonia solution, 25% W/W) was added with a syringe. The reaction (polymerization) was continued for 6 hours to give a milk-like colloidal solution. The obtained beads

were named as "A-1". The beads were washed with ethanol by using centrifuge with 7000G force for 9min. The supernatants were discarded and microspheres were resuspended in 25mM MES buffer.

EDC and NHS were dissolved separately in 25mM MES buffer to concentration 50mg/mL. 20μl of EDC solution was added per 1mg of water-soluble copolymer and followed by 20 μl of NHS solution. The suspension was mixed with 3mg of beads A-1 with to achieve concentration of 10mg/ml. The mixture was mixed for another 2h. The resultant beads A-2 were washed with Tris buffer by using centrifuge with 9000 rpm for 11min. The supernatants were discarded and microspheres were resuspended in 1x PBS buffer.

**Example 5**

Terpolymer conjugation to a microsphere surface with polyacid backbone on the surface

Water-soluble copolymer conjugation to a microsphere surface with polycarboxylic acid on the surface

To a 250 mL three-necked round bottom glass reactor equipped with a mechanical stirrer, AIBN solution (2 g, 12 wt% in acetone) was added and nitrogen was introduced from one side-neck to remove acetone solvent. After 10 minutes of nitrogen flow, dried AIBN powder was observed at the bottom of the reactor. Then PVP (0.2 g), ethanol (80 mL), and DI water (20 mL) were added. The mixture was stirred at room temperature for 5 minutes to obtain a clear solution, which was then heated to 60 °C with an oil bath, followed by addition of styrene (7.5 mL). A white colloidal solution was generated after 4 hours, indicating polymerization of styrene. A solution of DVB (3 mL DVB in 7 mL ethanol) was then slowly added with a constant pressure dropping funnel over 30 minutes. After addition of DVB solution was completed, the reaction (cross-linking polymerization) was continued for 3 hours. Then a monomer solution of 2-hydroxyethyl methacrylate (0.75 g in 5 mL ethanol) and carboxyethyl acrylate oligomers (0.75 g in 5 mL ethanol, neutralized with ammonia solution, 25% W/W) was added with a syringe. The reaction (polymerization) was continued for 6 hours to give a milk-like colloidal solution. The obtained beads were named as **"B-1".** The beads were washed with ethanol by using centrifuge with 7000G force for 9min. The supernatants were discarded and microspheres were resuspended in 25mM MES buffer.

EDC and NHS were dissolved separately in 25mM MES buffer to concentration 50mg/mL. 20μl of EDC solution was added per 3 mg of beads B-1 and followed by 20 μl of NHS solution. The mixture was mixed for 30min. The resulted activated beads were centrifuged with 7000G force for 9min to remove supernatant. The terpolymer solution (20mg/ml) was then added to the active beads and mixed for 2h. The resultant beads **B-2** were washed with Tris buffer by using centrifuge with 9000 rpm for 11min. The supernatants were discarded and microspheres were resuspended in 1xPBS buffer.

**Example 6**

Comparative Example 6-1

The water-soluble copolymer (II) was synthesized following the exact steps in example 1, 2, 3. Except monomer (1) was changed to 2-(methacryloyloxy)ethyl dimethyl-(3-sulfopropyl)ammonium hydroxide. The microsphere sample **C-1** was prepared following steps in example 4.

Comparative Example 6-2

The water-soluble copolymer (III) was synthesized following the exact steps. Except monomer (3) was not added during terpolymer synthesis in step 1. The microsphere sample **C-2** was prepared following steps in Example 4.

Comparative Example 6-3

The microsphere sample **B-1** was conjugated with Amine-PEG-Carboxylic acid hydrochloride (Mn 2000 Dalton) by using similar protocol in Example 5. EDC and NHS were dissolved separately in 25mM MES buffer to concentration 50mg/mL. 20μl of EDC solution was added per 3 mg of beads **B-1** and followed by 20μl of NHS solution. The mixture was mixed for 30min. The resulted activated beads were centrifuged with 9000 rpm for 11min to remove supernatant. The terpolymer solution (20mg/ml) was then added to the active beads and mixed for 2h. The resultant beads C-3 were washed with Tris buffer by using centrifuge with 9000G force for 11min. The supernatants were discarded and microspheres were resuspended in 1xPBS buffer.

**Example 7**

Nonspecific adsorption test

BSA and lysozyme have different isoelectric points. BSA (isoelectric point 5.5) and lysozyme (isoelectric point 11) are commonly used model proteins for studies. In this evaluation, both were used to evaluate nonspecific adsorption effect of different type of beads surface.

BSA and lysozyme were dissolved in 1xPBS buffer solution to prepare stock solution with concentration of 0.2mg/ml, respectively. A total dry mass of 0.1mg of protein was added per 1mg dry mass of beads sample (10mg/ml, 0.1ml). A series of beads samples prepared in Examples 4, 5 and 6 were studied.

The beads-protein suspensions were mixed at 25°C for 2h to achieve adsorption equilibrium. The samples were centrifuged with 9000 rpm for 11min to precipitate the particles. The protein content in supernatants were determined by using UV-Vis spectroscopy under 280nm. The amount of adsorbed protein on the beads surface was calculated by equation (1).

$$y_{ad} = \frac{P_{tot} - P_S}{P_{tot}} \times 100\% \qquad (1)$$

$y_{ad}$ represents the percentage of the protein adsorbed on the beads surface, in %;
$P_{tot}$ represent the total amount of protein dosed, in mg;
$P_s$ represents the amount of protein in the supernatant, in mg.

As shown in Figure 1, when the water-soluble copolymer in the present embodiment is coated on the beads surface (See A-2 and B-2), there is no adsorption of either BSA or lysozyme. When only polyacid backbone is coated on the surface of beads (see B1), the adsorption of lysozyme is more significant than BSA. This is believed to be because BSA is negatively charged while lysozyme is positively charged in 1xPBS buffer, and so is expected to be more prone to adsorption on a negatively charged surface. The combination of 2-Methacryloyloxyethyl-phosphorylcholine and 2-hydroxyethyl methacrylate, was able to prevent any adsorption of BSA and lysozyme. This performance was superior to 2-(methacryloyloxy)ethyl dimethyl-(3-sulfopropyl)ammonium hydroxide or 2-Methacryloyloxyethyl-phosphorylcholine alone. In addition, linear PEG which is a commonly used antifouling brush to prevent nonspecific adsorption shows the highest non-specific adsorption for both proteins (i.e. worst performance).

It is therefore clear that the invention provides an improved coating for preventing non-specific adsorption of biomolecules onto surfaces. The invention is able to prevent non-specific adsorption on both positively-charged (amine, Example 4) and negatively-charged (carboxylic acid, Example 5) surfaces.

## Claims

1. A water-soluble crosslinked copolymer formed by crosslinking a first polymer chain to a second polymer chain comprising a polycarboxylic acid, wherein

   the first chain before crosslinking comprises a constitutional unit (a) comprising a zwitterionic phosphorylcholine group, a constitutional unit (b) comprising an amine group and a constitutional unit (c) comprising a hydroxyl group; and
   the water-soluble crosslinked copolymer comprises one or more crosslinks formed between carboxylic acid groups in the second chain and amine groups in the first chain,
   optionally wherein said amine group in the first chain is a primary amine group.

2. The water-soluble crosslinked copolymer of Claim 1, which is a water-soluble crosslinked copolymer comprising:

   a first chain comprising a constitutional unit (A') and/or (A"), a constitutional unit (B) and a constitutional unit (C), and
   a second chain comprising a constitutional unit (D),
   wherein the water-soluble crosslinked copolymer comprises one or more crosslinks between the first chain and the second chain:

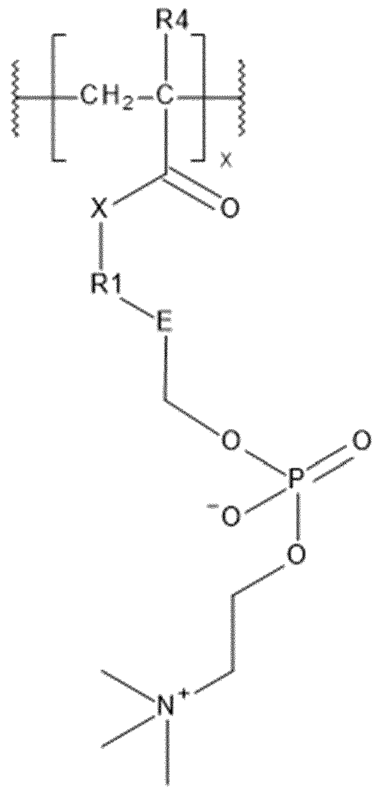

(A')

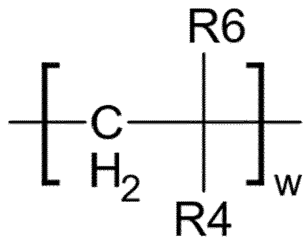

(B)

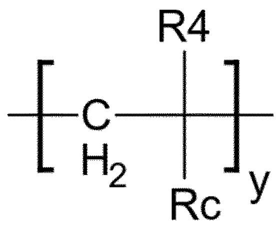

(C)

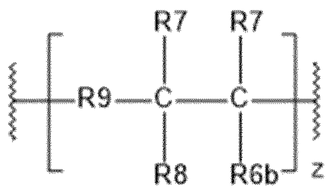

(D)

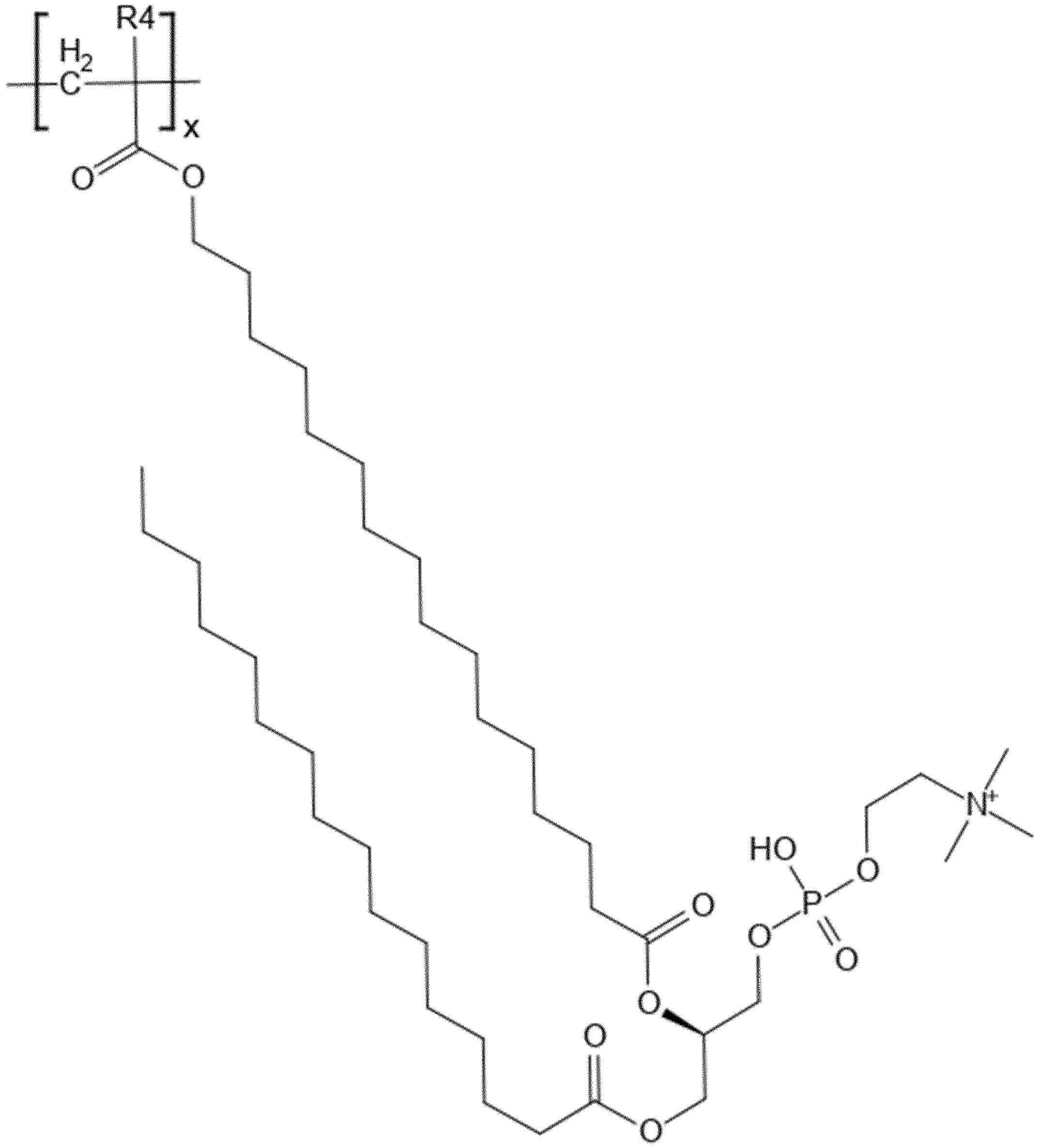

(A'')

wherein:

X represents O or NH;
R1 represents a linear or branched alkylene group having from 1 to 5 carbon atoms;
E represents a covalent bond, -C(O)O-, -OC(O)-, -NHC(O)- or -C(O)NH-;
Rc represents a hydroxyl-containing group;
each R4 independently represents a methyl group or a hydrogen atom;
R6 represents a moiety comprising an amine group (e.g. a primary amine group) and R6b represents -COOH or -C(O)O-Y-COOH, where Y represents a $C_{1-5}$ alkylene group, provided that at least one R6 in the first chain is covalently connected to an R6b in the second chain *via* an amide bond formed between an amine group in said R6 and a carboxylic acid in said R6b;
each R7 is independently selected from the group consisting of a hydrogen atom, a methyl group, an ethyl group, a n-propyl group, an isopropyl group, a methoxyethyl group, a hydroxymethyl group, and a hydroxyethyl group;
R8 represents a carboxyl group or a hydrogen atom;
R9 represents a covalent bond, a linear or branched alkylene having from 1 to 10 carbon atoms, or a linear alkylene having from 1 to 5 carbon atoms having from 1 to 3 substituents selected from the group consisting of

a methoxy group, a hydroxymethyl group, a hydroxyethyl group and a methoxyethyl group;
w, x, y, z are independently of each other, an integer of from 1 to 50.

**3.** The water-soluble crosslinked copolymer of Claim 1 or 2, wherein the weight average molecular weight of the water-soluble crosslinked copolymer is from 2,000 to 1,000,000 Daltons, preferably 5,000 to 500,000 Daltons, more preferably from 10,000 to 250,000 Daltons.

**4.** The water-soluble crosslinked copolymer of Claim 2 or 3, wherein:

(a) said first chain is a random copolymer comprising constitutional unit (A') and/or (A"), constitutional unit (B) and constitutional unit (C); and/or
(b) the first chain comprises a constitutional unit (A') where X is O, R1 is methylene and E is a covalent bond; or

the first chain comprises a constitutional unit (A").

**5.** The water-soluble crosslinked copolymer of any one of Claims 2 to 4, wherein constitutional unit (B) represents a constitutional unit formed from the polymerisation of one of the group consisting of allylamine hydrochloride, 4-vinylaniline, 2-aminoethyl methacrylate hydrochloride, 2-aminoethyl acrylate, amino acrylate, N-(2-aminoethyl) methacrylamide hydrochloride, N-(3-aminopropyl)methacrylamide hydrochloride, and 2-aminoethyl methacrylate phenothiazine (e.g. N-(2-aminoethyl) methacrylamide hydrochloride).

**6.** The water-soluble crosslinked copolymer of any one of Claims 2 to 4, wherein constitutional unit (B) has the formula

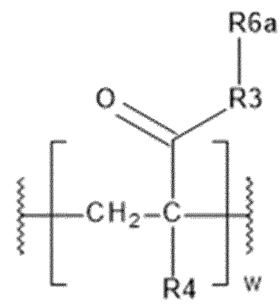

,

wherein
R3 represents O or NH, R4 is as defined in Claim 2 and R6a represents $-Y-CH_2-NH_2$ or $-Z-NH_2$, where Y represents a $C_{1-5}$ alkylene group and Z represents a $C_{6-12}$ aryl group.

**7.** The water-soluble crosslinked copolymer of any one of Claims 2 to 6, wherein:

(a) constitutional unit (C) has the formula

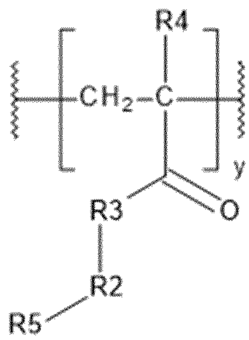

wherein

R2 represents a linear or branched alkylene group having from 1 to 18 carbon atoms, a polyoxyalkylene group with a unit number of from 1 to 20, or an arylene group having from 6 to 18 carbon atoms,

R3 represents O or NH;
R4 is as defined in Claim 2;
R5 represents $C_nH_{2n-m+1}(OH)_m$, where n represents an integer of from 1 to 5, and m is 1, 2 or 3, optionally wherein:

(i) m is 1; and/or
(ii) R2 represents an ethylene glycol or a propylene glycol having from 1 to 20 repeating units; or

(b) constitutional unit (C) is a constitutional unit formed from the polymerisation of one of the group consisting of 2-hydroxyethyl methacrylate, 2-hydroxyethyl acrylate, hydroxypolyethoxy (10) Allyl Ether, N-(2-hydroxypropyl) methacrylamide, glycerol monomethacrylate, 3-phenoxy-2-hydroxypropyl methacrylate, hydroxypropyl methacrylate, 4-hydroxybutyl acrylate, 2-hydroxypropyl acrylate, N-hydroxyethyl acrylamide, poly(ethylene glycol) methacrylate, poly(propylene glycol) methacrylate, and N-[tris(hydroxymethyl)methyl]acrylamide (e.g. 2-hydroxyethyl methacrylate).

**8.** The water-soluble crosslinked copolymer of any one of the preceding Claims, wherein the weight average molecular weight of the first chain is from 500 to 100,000 Daltons, preferably from 2,000 Daltons to 50,000 Daltons.

**9.** The water-soluble crosslinked copolymer of any one of Claims 2 to 8, wherein constitutional unit (D) is a constitutional unit formed from the polymerisation of one of the group consisting of poly(acrylic acid), polymethacrylic acid, polystyrene-block-poly(acrylic acid), polymaleic acid, poly(acrylic acid-co-maleic acid), poly(D,L-lactide-block-acrylic acid), poly(acrylamide-co-acrylic acid), poly(N-isopropylacrylamide-co-acrylic acid), and poly(ethylene-co-acrylic acid), optionally wherein constitutional unit (D) is a constitutional unit formed from the polymerisation of one of the group consisting of acrylic acid, methacrylic acid and 2-carboxyethyl acrylate.

**10.** The water-soluble crosslinked copolymer of any one of the preceding Claims, wherein:

(a) the weight average molecular weight of the second chain is from 2,000 to 700,000 Daltons, preferably 5,000 to 350,000 Daltons, more preferably from 10,000 to 250,000 Daltons; and/or
(b) from 5% to 75% of carboxylic acid groups in the second chain are crosslinked to amine groups in the first chain, preferably from 10% to 50%.

**11.** A method for the preparation of the water-soluble crosslinked copolymer of any one of the preceding Claims, comprising the steps:

(a) mixing a monomer corresponding to constitutional unit (1), a monomer corresponding to constitutional unit (2), and a monomer corresponding to constitutional unit (3) in a solvent (e.g. water);
(b1) polymerising the monomer mixture, optionally by adding an initiator and heating to a temperature of from 55 to 90°C for 5 to 24 hours; and
(c1) conjugating the polymer obtained in step (b1) to a polycarboxylic acid to form the water-soluble crosslinked copolymer, optionally in the presence of a buffer having a pH from 4.5 to 8.5.

**12.** The method of Claim 11, further comprising a step (d):
(d) conjugating the water-soluble crosslinked copolymer obtained in step (c1) to a substrate.

**13.** The method of Claim 11, further comprising a step (b2) or (c0):

(b2) conjugating the polymer obtained in step (b1) to a substrate before step (c1); or
(c0) conjugating the polycarboxylic acid in step (c1) to a substrate before conjugating the polymer obtained in step (b1) to the polycarboxylic acid.

**14.** The method of Claim 12 or 13, wherein:

(a) the substrate is selected from particles, hollow filters, plastic tubes, glass fibers, glass slides, microplates and microfluidic devices, (e.g. wherein the substrate is selected from particles, hollow filters, microplates and microfluidic devices); and/or
(b) the material of the substrate is selected from polymeric, organic or composite materials, such as polyurethanes, polyacrylonitriles, polymethacrylate, carbon fibers, cellulosic materials, polyacrylamide, polyacrylate,

polyolefins, poly(4-methylbutene, polystyrene, poly(ethylene terephthalate), polysiloxanes, nylon, poly(vinyl butyrate), ferromagnetic materials, silica, or mixtures or composites of any of the above; and/or
(c) wherein the substrate is functionalised with one or more of the group consisting of a primary amine, an epoxide group, a tosyl group and an aldehyde group, optionally wherein the substrate is functionalised with a primary amine.

**15.** A substrate comprising the water-soluble crosslinked copolymer of any one of Claims 1 to 10.

## Patentansprüche

**1.** Wasserlösliches vernetztes Copolymer, das durch Vernetzung einer ersten Polymerkette mit einer zweiten Polymerkette, umfassend eine Polycarbonsäure, gebildet wird, wobei

die erste Kette vor der Vernetzung eine Struktureinheit (a), umfassend eine zwitterionische Phosphorylcholingruppe, eine Struktureinheit (b), umfassend eine Amingruppe, und eine Struktureinheit (c), umfassend eine Hydroxylgruppe, umfasst; und
das wasserlösliche vernetzte Copolymer eine oder mehrere Vernetzungen umfasst, die zwischen Carbonsäuregruppen in der zweiten Kette und Amingruppen in der ersten Kette gebildet sind,
optional, wobei die Amingruppe in der ersten Kette eine primäre Amingruppe ist.

**2.** Wasserlösliches vernetztes Copolymer nach Anspruch 1, das ein wasserlösliches vernetztes Copolymer ist, umfassend:

eine erste Kette, umfassend eine Struktureinheit (A') und/oder (A"), eine Struktureinheit (B) und eine Struktureinheit (C), und
eine zweite Kette, umfassend eine Struktureinheit (D),
wobei das wasserlösliche vernetzte Copolymer eine oder mehrere Vernetzungen zwischen der ersten Kette und der zweiten Kette umfasst:

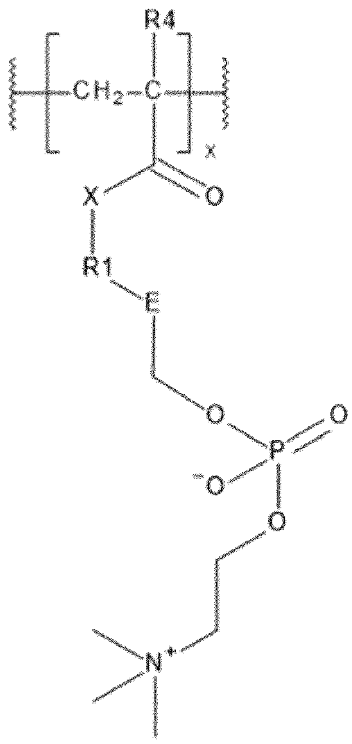

(A')

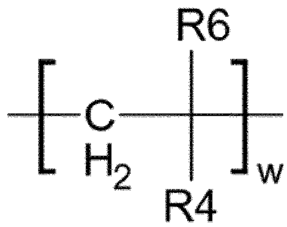

(B)

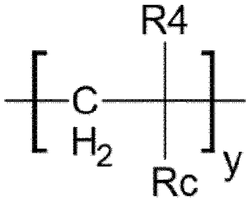

(C)

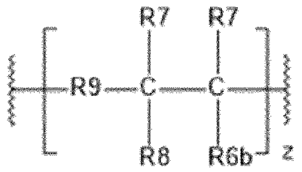

(D)

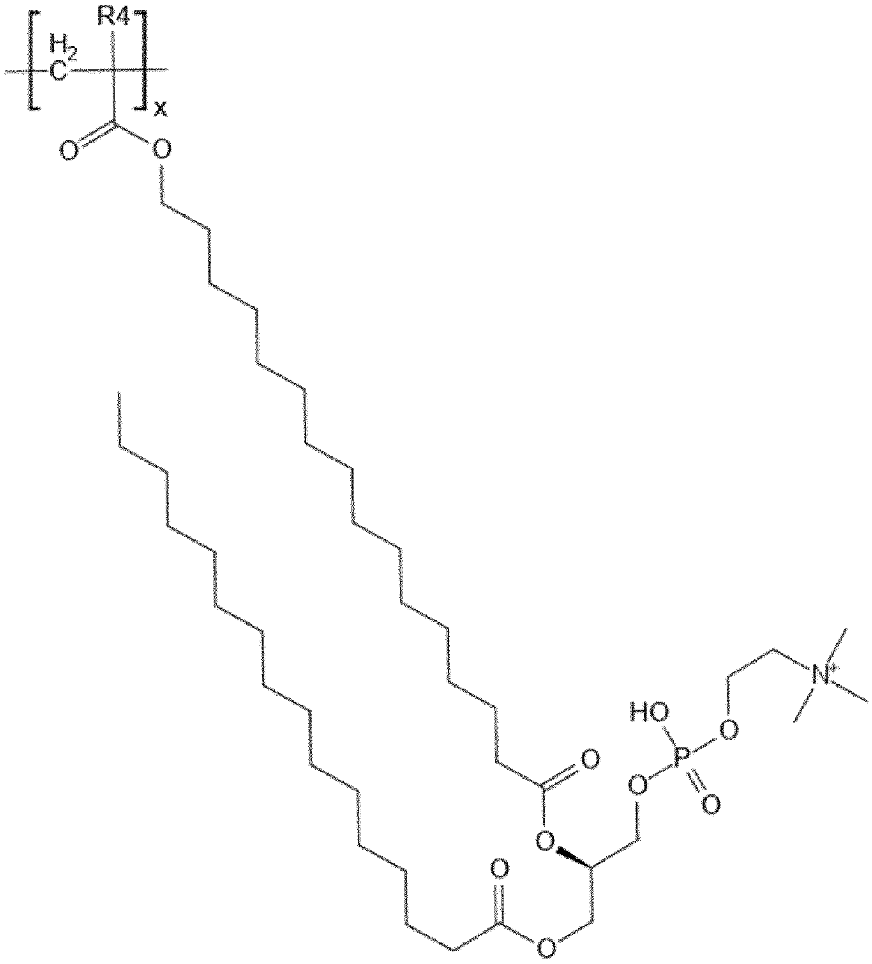

(A'')

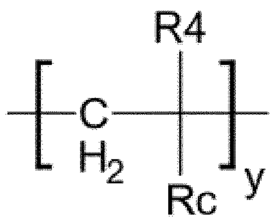

(C)

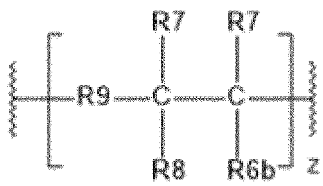

(D)

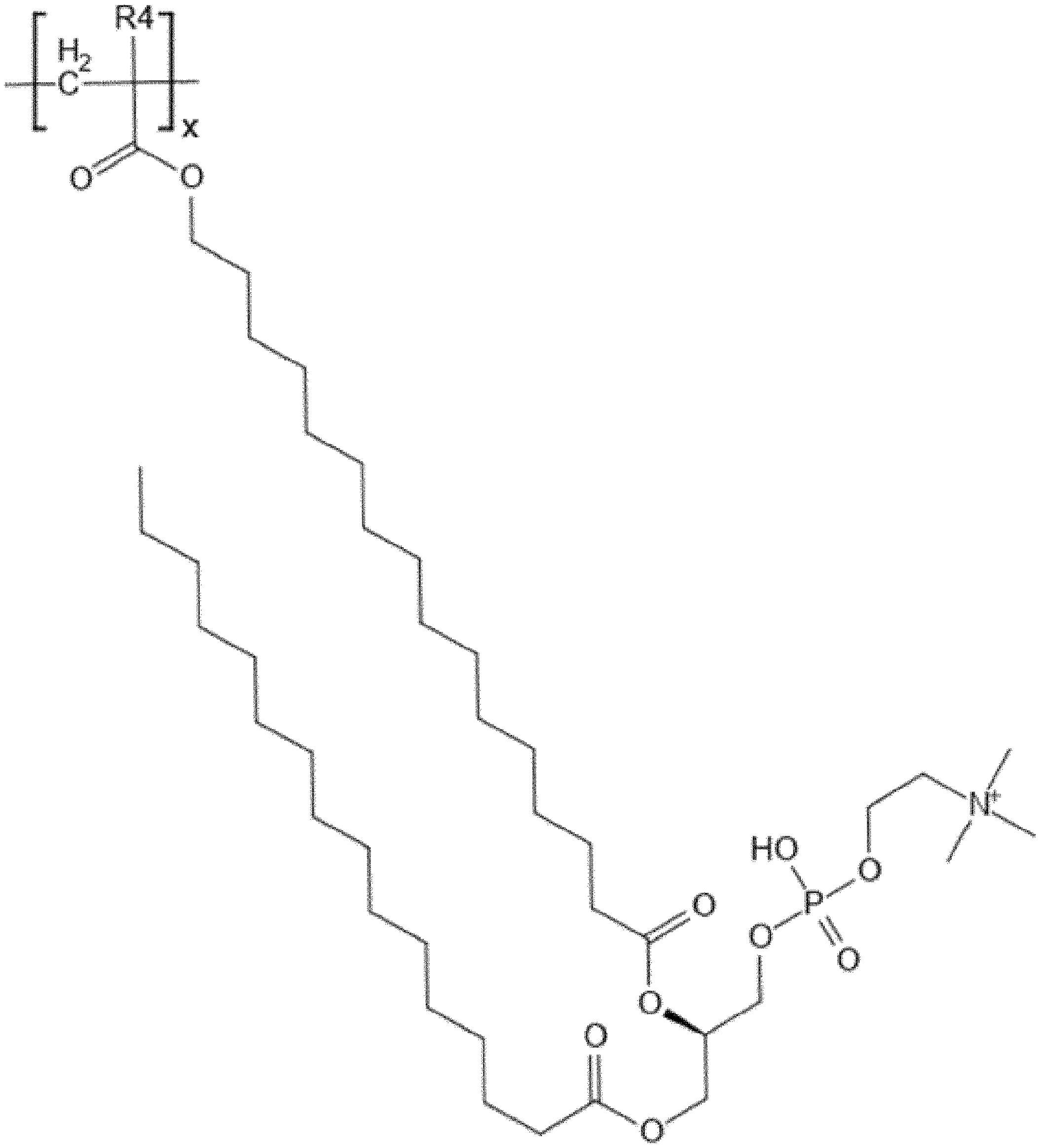

(A'')

wobei:

X O oder NH darstellt;
R1 eine lineare oder verzweigte Alkylengruppe mit 1 bis 5 Kohlenstoffatomen darstellt;
E eine kovalente Bindung, -C(O)O-, -OC(O)-, -NHC(O)- oder -C(O)NH- darstellt;
Rc eine hydroxylhaltige Gruppe darstellt;
jedes R4 unabhängig eine Methylgruppe oder ein Wasserstoffatom darstellt;
R6 eine Einheit darstellt, umfassend eine Amingruppe (z.B. eine primäre Amingruppe), und R6b -COOH oder -C(O)O-Y-COOH darstellt, wobei Y eine $C_{1-5}$-Alkylengruppe darstellt, mit der Maßgabe, dass mindestens ein R6 in der ersten Kette über eine Amidbindung, die zwischen einer Amingruppe in dem R6 und einer Carbonsäure in dem R6b gebildet wird, kovalent mit einem R6b in der zweiten Kette verbunden ist;
jedes R7 unabhängig ausgewählt ist aus der Gruppe, bestehend aus einem Wasserstoffatom, einer Methylgruppe, einer Ethylgruppe, einer n-Propylgruppe, einer Isopropylgruppe, einer Methoxyethylgruppe, einer Hydroxymethylgruppe und einer Hydroxyethylgruppe;
R8 eine Carboxylgruppe oder ein Wasserstoffatom darstellt;
R9 eine kovalente Bindung, ein lineares oder verzweigtes Alkylen mit 1 bis 10 Kohlenstoffatomen oder ein lineares Alkylen mit 1 bis 5 Kohlenstoffatomen mit 1 bis 3 Substituenten, ausgewählt aus der Gruppe, bestehend aus einer Methoxygruppe, einer Hydroxymethylgruppe, einer Hydroxyethylgruppe und einer

Methoxyethylgruppe, darstellt;
w, x, y, z unabhängig voneinander eine ganze Zahl von 1 bis 50 sind.

**3.** Wasserlösliches vernetztes Copolymer nach Anspruch 1 oder 2, wobei das gewichtsmittlere Molekulargewicht des wasserlöslichen vernetzten Copolymers 2 000 bis 1 000 000 Dalton, vorzugsweise 5 000 bis 500 000 Dalton, bevorzugter 10 000 bis 250 000 Dalton beträgt.

**4.** Wasserlösliches vernetztes Copolymer nach Anspruch 2 oder 3, wobei

(a) die erste Kette ein statistisches Copolymer ist, umfassend die Struktureinheit (A') und/oder (A"), die Struktureinheit (B) und die Struktureinheit (C); und/oder
(b) die erste Kette eine Struktureinheit (A') umfasst, wobei X O ist, R1 Methylen ist und E eine kovalente Bindung ist; oder

die erste Kette eine Struktureinheit (A") umfasst.

**5.** Wasserlösliches vernetztes Copolymer nach einem der Ansprüche 2 bis 4, wobei die Struktureinheit (B) eine Struktureinheit darstellt, die durch Polymerisation einer aus der Gruppe, bestehend aus Allylaminhydrochlorid, 4-Vinylanilin, 2-Aminoethylmethacrylathydrochlorid, 2-Aminoethylacrylat, Aminoacrylat, N-(2-Aminoethyl)methacrylamidhydrochlorid, N-(3-Aminopropyl)methacrylamidhydrochlorid und 2-Aminoethylmethacrylatphenothiazin (z.B. N-(2-Aminoethyl)methacrylamidhydrochlorid) gebildet wird.

**6.** Wasserlösliches vernetztes Copolymer nach einem der Ansprüche 2 bis 4, wobei die Struktureinheit (B) die Formel aufweist

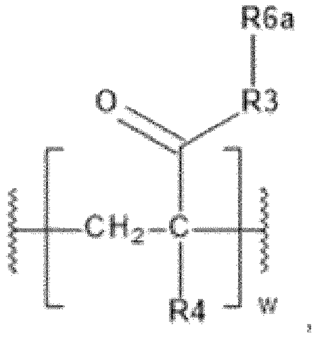

wobei
R3 O oder NH darstellt, R4 wie in Anspruch 2 definiert ist und R6a $-Y-CH_2-NH_2$ oder $-Z-NH_2$ darstellt, wobei Y eine $C_{1-5}$-Alkylengruppe darstellt und Z eine $C_{6-12}$-Arylgruppe darstellt.

**7.** Wasserlösliches vernetztes Copolymer nach einem der Ansprüche 2 bis 6, wobei:

(a) die Struktureinheit (C) die Formel aufweist

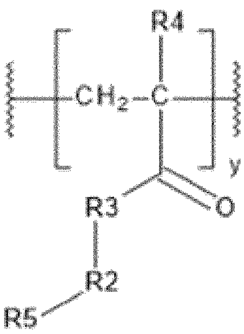

wobei

R2 eine lineare oder verzweigte Alkylengruppe mit 1 bis 18 Kohlenstoffatomen, eine Polyoxyalkylengruppe mit einer Einheitenzahl von 1 bis 20 oder eine Arylengruppe mit 6 bis 18 Kohlenstoffatomen darstellt,
R3 O oder NH darstellt;
R4 wie in Anspruch 2 definiert ist;
R5 $C_nH_{2n-m+1}(OH)_m$ darstellt, wobei n eine ganze Zahl von 1 bis 5 darstellt und m 1, 2 oder 3 ist, wobei optional:

(i) m 1 ist; und/oder
(ii) R2 ein Ethylenglykol oder ein Propylenglykol mit 1 bis 20 wiederkehrenden Einheiten darstellt; oder

(b) Struktureinheit (C) eine Struktureinheit ist, die durch Polymerisation einer aus der Gruppe, bestehend aus 2-Hydroxyethylmethacrylat, 2-Hydroxyethylacrylat, Hydroxypolyethoxy(10)allylether, N-(2-Hydroxypropyl)methacrylamid, Glycerinmonomethacrylat, 3-Phenoxy-2-hydroxypropylmethacrylat, Hydroxypropylmethacrylat, 4-Hydroxybutylacrylat, 2-Hydroxypropylacrylat, N-Hydroxyethylacrylamid, Poly(ethylenglycol)methacrylat, Poly(propylenglycol)methacrylat und N-[Tris(hydroxymethyl)methyl]acrylamid (z.B. 2-Hydroxyethylmethacrylat), gebildet wird.

**8.** Wasserlösliches vernetztes Copolymer nach einem der vorhergehenden Ansprüche, wobei das gewichtsmittlere Molekulargewicht der ersten Kette 500 bis 100 000 Dalton, vorzugsweise 2 000 Dalton bis 50 000 Dalton beträgt.

**9.** Wasserlösliches vernetztes Copolymer nach einem der Ansprüche 2 bis 8, wobei Struktureinheit (D) eine Struktureinheit ist, die durch Polymerisation einer aus der Gruppe, bestehend aus Poly(acrylsäure), Polymethacrylsäure, Polystyrol-block-poly(acrylsäure), Polymaleinsäure, Poly(acrylsäure-co-maleinsäure), Poly(D,L-milch-block-acrylsäure), Poly(acrylamid-co-acrylsäure), Poly(N-isopropylacrylamid-co-acrylsäure) und Poly(ethylen-co-acrylsäure), gebildet wird, wobei die Struktureinheit (D) optional eine Struktureinheit ist, die durch Polymerisation einer aus der Gruppe, bestehend aus Acrylsäure, Methacrylsäure und 2-Carboxyethylacrylat, gebildet wird.

**10.** Wasserlösliches vernetztes Copolymer nach einem der vorhergehenden Ansprüche, wobei

(a) das gewichtsmittlere Molekulargewicht der zweiten Kette 2 000 bis 700 000 Dalton, vorzugsweise 5 000 bis 350 000 Dalton, bevorzugter 10 000 bis 250 000 Dalton beträgt; und/oder
(b) 5 % bis 75 % der Carbonsäuregruppen in der zweiten Kette mit Amingruppen in der ersten Kette vernetzt sind, vorzugsweise 10 % bis 50 %.

**11.** Verfahren zur Herstellung des wasserlöslichen vernetzten Copolymers nach einem der vorhergehenden Ansprüche, umfassend die Schritte:

(a) Mischen eines Monomers, entsprechend der Struktureinheit (1), eines Monomers, entsprechend der Struktureinheit (2), und eines Monomers, entsprechend der Struktureinheit (3), in einem Lösungsmittel (z.B. Wasser);
(b1) Polymerisieren des Monomergemisches, optional durch Zugabe eines Initiators und Erhitzen auf eine Temperatur von 55 bis 90°C für 5 bis 24 Stunden; und
(c1) Konjugieren des in Schritt (b1) erhaltenen Polymers mit einer Polycarbonsäure, um das wasserlösliche vernetzte Copolymer zu bilden, optional in Gegenwart eines Puffers mit einem pH-Wert von 4,5 bis 8,5.

**12.** Verfahren nach Anspruch 11, ferner umfassend einen Schritt (d):
(d) Konjugieren des in Schritt (c1) erhaltenen wasserlöslichen vernetzten Copolymers an ein Substrat.

**13.** Verfahren nach Anspruch 11, ferner umfassend einen Schritt (b2) oder (c0):

(b2) Konjugieren des in Schritt (b1) erhaltenen Polymers an ein Substrat vor Schritt (c1); oder
(c0) Konjugieren der Polycarbonsäure in Schritt (c1) an ein Substrat vor dem Konjugieren des in Schritt (b1) erhaltenen Polymers an die Polycarbonsäure.

**14.** Verfahren nach Anspruch 12 oder 13, wobei:

(a) das Substrat aus Teilchen, Hohlfiltern, Kunststoffröhrchen, Glasfasern, Glasobjektträgern, Mikrotiterplatten und mikrofluidischen Vorrichtungen (wobei das Substrat z.B. aus Teilchen, Hohlfiltern, Mikrotiterplatten und

mikrofluidischen Vorrichtungen ausgewählt ist) ausgewählt ist; und/oder
(b) das Material des Substrats aus polymeren, organischen oder Verbundmaterialien wie Polyurethanen, Polyacrylnitrilen, Polymethacrylat, Kohlenstofffasern, Cellulosematerialien, Polyacrylamid, Polyacrylat, Polyolefinen, Poly(4-methylbuten), Polystyrol, Poly(ethylenterephthalat), Polysiloxanen, Nylon, Poly(vinylbutyrat), ferromagnetischen Materialien, Siliciumdioxid oder Gemischen oder Verbundstoffen aus einem der Vorstehenden ausgewählt ist; und/oder
(c) wobei das Substrat mit einer oder mehreren aus der Gruppe, bestehend aus einem primären Amin, einer Epoxidgruppe, einer Tosylgruppe und einer Aldehydgruppe, funktionalisiert ist, wobei das Substrat optional mit einem primären Amin funktionalisiert ist.

**15.** Substrat, umfassend das wasserlösliche vernetzte Copolymer nach einem der Ansprüche 1 bis 10.

## Revendications

**1.** Copolymère réticulé soluble dans l'eau formé par réticulation d'une première chaîne polymère à une deuxième chaîne polymère comprenant un acide polycarboxylique, dans lequel :

la première chaîne, avant la réticulation, comprend une unité constitutive (a) comprenant un groupe phosphorylcholine zwitterionique, une unité constitutive (b) comprenant un groupe amine et une unité constitutive (c) comprenant un groupe hydroxyle ; et
le copolymère réticulé soluble dans l'eau comprend une ou plusieurs réticulations formées entre les groupes acide carboxylique de la deuxième chaîne et les groupes amine de la première chaîne,
ledit groupe amine de la première chaîne étant facultativement un groupe amine primaire.

**2.** Copolymère réticulé soluble dans l'eau selon la revendication 1, qui est un copolymère réticulé soluble dans l'eau comprenant :

une première chaîne comprenant une unité constitutive (A') et/ou (A"), une unité constitutive (B) et une unité constitutive (C), et
une deuxième chaîne comprenant une unité constitutive (D),
le copolymère réticulé soluble dans l'eau comprenant une ou plusieurs réticulations entre la première chaîne et la deuxième chaîne :

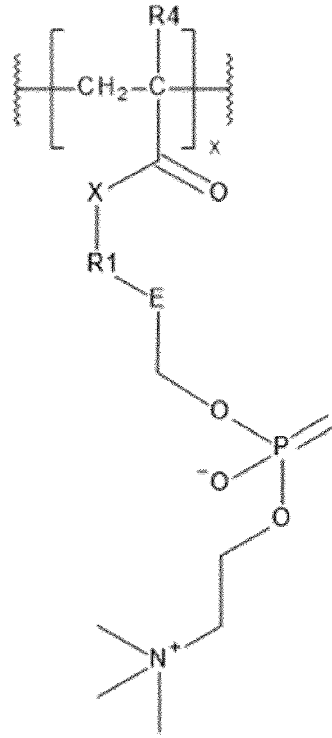

(A')

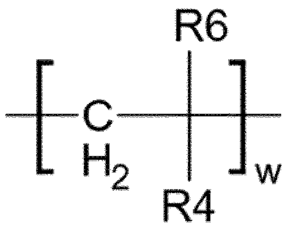

(B)

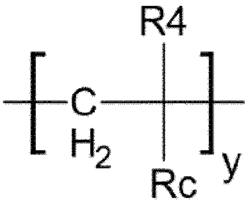

(C)

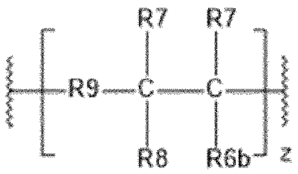

(D)

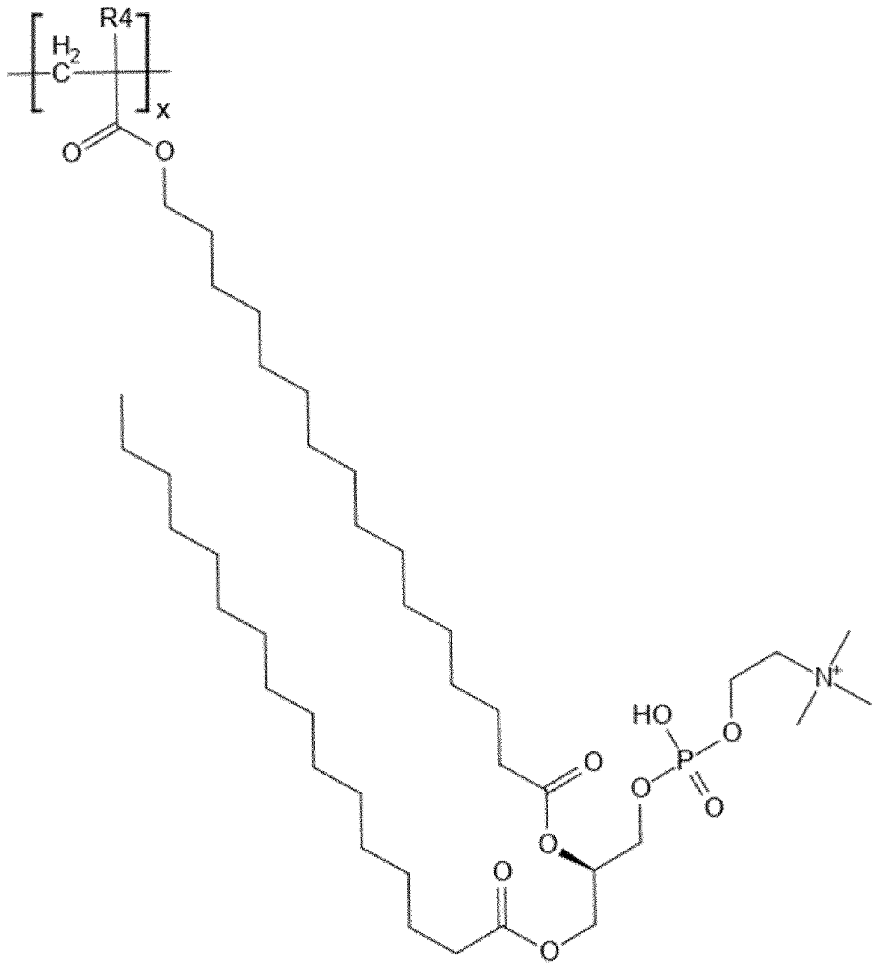

(A")

dans lesquelles :

X représente O ou NH ;
R1 représente un groupe alkylène linéaire ou ramifié possédant de 1 à 5 atomes de carbone ;
E représente une liaison covalente, -C(O)O-, -OC(O)-, -NHC(O)- ou -C(O)NH- ;
Rc représente un groupe contenant un hydroxyle ;
chaque R4 représente indépendamment un groupe méthyle ou un atome d'hydrogène ;
R6 représente une fraction comprenant un groupe amine (par ex. un groupe amine primaire) et R6b représente -COOH ou -C(O)O-Y-COOH, où Y représente un groupe alkylène en $C_{1-5}$, à condition qu'au moins un R6 de la première chaîne soit lié par covalence à un R6b de la deuxième chaîne par une liaison amide formée entre un groupe amine dudit R6 et un acide carboxylique dudit R6b ;
chaque R7 est indépendamment choisi dans le groupe constitué de : un atome d'hydrogène, un groupe méthyle, un groupe éthyle, un groupe n-propyle, un groupe isopropyle, un groupe méthoxyéthyle, un groupe hydroxyméthyle et un groupe hydroxyéthyle ;
R8 représente un groupe carboxyle ou un atome d'hydrogène ;
R9 représente une liaison covalente, un alkylène linéaire ou ramifié possédant de 1 à 10 atomes de carbone ou un alkylène linéaire possédant de 1 à 5 atomes de carbone possédant de 1 à 3 substituants choisis dans le groupe constitué de : un groupe méthoxy, un groupe hydroxyméthyle, un groupe hydroxyéthyle et un groupe méthoxyéthyle ;
w, x, y, z sont indépendamment les uns des autres un nombre entier de 1 à 50.

**3.** Copolymère réticulé soluble dans l'eau selon la revendication 1 ou 2, dans lequel le poids moléculaire moyen en poids du copolymère réticulé soluble dans l'eau va de 2 000 à 1 000 000 daltons, de préférence de 5 000 à 500 000 daltons, plus préférablement de 10 000 à 250 000 daltons.

**4.** Copolymère réticulé soluble dans l'eau selon la revendication 2 ou 3, dans lequel :

(a) ladite première chaîne est un copolymère aléatoire comprenant une unité constitutive (A') et/ou (A"), une unité constitutive (B) et une unité constitutive (C) ; et/ou
(b) la première chaîne comprend une unité constitutive (A') où X représente O, R1 représente un méthylène et E une liaison covalente ; ou

la première chaîne comprend une unité constitutive (A").

**5.** Copolymère réticulé soluble dans l'eau selon l'une quelconque des revendications 2 à 4, dans lequel l'unité constitutive (B) représente une unité constitutive formée à partir de la polymérisation d'un élément du groupe constitué de : chlorhydrate d'allylamine, 4-vinylaniline, chlorhydrate de 2-aminoéthylméthacrylate, 2-aminoéthylacrylate, aminoacrylate, chlorhydrate de N-(2-aminoéthyl)méthacrylamide, chlorhydrate de N-(3-aminopropyl)méthacrylamide et phénothiazine de 2-aminoéthylméthacrylate (par ex. chlorhydrate de N-(2-aminoéthyl)méthacrylamide).

**6.** Copolymère réticulé soluble dans l'eau selon l'une quelconque des revendications 2 à 4, dans lequel l'unité constitutive (B) présente la formule :

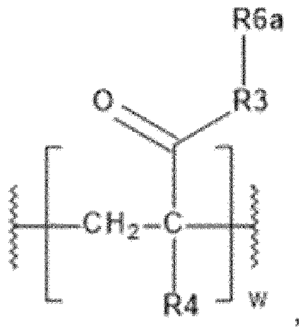
,

dans laquelle :
R3 représente O ou NH, R4 est tel que défini dans la revendication 2 et R6a représente $-Y-CH_2-NH_2$ ou $-Z-NH_2$, où Y représente un groupe alkylène en $C_{1-5}$ et Z représente un groupe aryle en $C_{6-12}$.

**7.** Copolymère réticulé soluble dans l'eau selon l'une quelconque des revendications 2 à 6, dans lequel :

(a) l'unité constitutive (C) présente la formule :

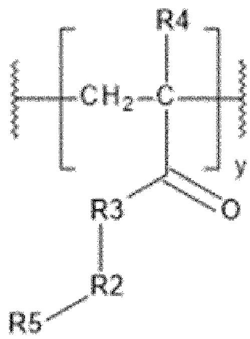

dans laquelle :

R2 représente un groupe alkylène linéaire ou ramifié possédant de 1 à 18 atomes de carbone, un groupe polyoxyalkylène avec un nombre d'unités de 1 à 20 ou un groupe arylène possédant de 6 à 18 atomes de carbone,
R3 représente O ou NH ;
R4 est tel que défini dans la revendication 2 ;

R5 représente $C_nH_{2n-m+1}(OH)_m$, où n représente un nombre entier de 1 à 5 et m vaut 1, 2 ou 3 ; facultativement où :

(i) m vaut 1 ; et/ou
(ii) R2 représente un éthylène glycol ou un propylène glycol possédant de 1 à 20 unités de répétition ; ou

(b) l'unité constitutive (C) est une unité constitutive formée à partir de la polymérisation d'un élément du groupe constitué de : 2-hydroxyéthylméthacrylate, 2-hydroxyéthylacrylate, hydroxypolyéthoxy-(10)-allyléther, N-(2-hydroxypropyl)méthacrylamide, glycérol monométhacrylate, 3-phénoxy-2-hydroxypropylméthacrylate, hydroxypropylméthacrylate, 4-hydroxybutylacrylate, 2-hydroxypropylacrylate, N-hydroxyéthylacrylamide, poly(éthylène glycol)méthacrylate, poly(propylène glycol)méthacrylate et N-[tris(hydroxyméthyl)méthyl]acrylamide (par ex. 2-hydroxyéthylméthacrylate).

**8.** Copolymère réticulé soluble dans l'eau selon l'une quelconque des revendications précédentes, dans lequel le poids moléculaire moyen en poids de la première chaîne va de 500 à 100 000 daltons, de préférence de 2 000 daltons à 50 000 daltons.

**9.** Copolymère réticulé soluble dans l'eau selon l'une quelconque des revendications 2 à 8, dans lequel l'unité constitutive (D) est une unité constitutive formée à partir de la polymérisation d'un élément du groupe constitué de : poly(acide acrylique), acide polyméthacrylique, polystyrène-bloc-poly(acide acrylique), acide polymaléique, poly(acide acrylique-co-acide maléique), poly(D,L-lactide-bloc-acide acrylique), poly(acrylamide-co-acide acrylique), poly(N-isopropylacrylamide-co-acide acrylique) et poly(éthylène-co-acide acrylique), ladite unité constitutive (D) étant facultativement une unité constitutive formée à partir de la polymérisation d'un élément du groupe constitué de : acide acrylique, acide méthacrylique et 2-carboxyéthylacrylate.

**10.** Copolymère réticulé soluble dans l'eau selon l'une quelconque des revendications précédentes, dans lequel :

(a) le poids moléculaire moyen en poids de la deuxième chaîne va de 2 000 à 700 000 daltons, de préférence de 5 000 à 350 000 daltons, plus préférablement de 10 000 à 250 000 daltons ; et/ou
(b) de 5 % à 75 % des groupes acide carboxylique de la deuxième chaîne sont réticulés à des groupes amine de la première chaîne, de préférence de 10 % à 50 %.

**11.** Procédé de préparation du copolymère réticulé soluble dans l'eau selon l'une quelconque des revendications précédentes, comprenant les étapes de :

(a) mélange d'un monomère correspondant à une unité constitutive (1), d'un monomère correspondant à une unité constitutive (2) et d'un monomère correspondant à une unité constitutive (3) dans un solvant (par ex. eau) ;
(b1) polymérisation du mélange de monomères, facultativement par ajout d'un initiateur et chauffage à une température de 55 à 90°C pendant 5 à 24 heures ; et
(c1) conjugaison du polymère obtenu à l'étape (b1) à un acide polycarboxylique pour former le copolymère réticulé soluble dans l'eau, facultativement en présence d'un tampon ayant un pH de 4,5 à 8,5.

**12.** Procédé selon la revendication 11, comprenant en outre une étape (d) de :
(d) conjugaison du copolymère réticulé soluble dans l'eau obtenu à l'étape (c1) à un substrat.

**13.** Procédé selon la revendication 11, comprenant en outre une étape (b2) ou (c0) de :

(b2) conjugaison du polymère obtenu à l'étape (b1) à un substrat avant l'étape (c1) ; ou
(c0) conjugaison de l'acide polycarboxylique, à l'étape (c1), à un substrat avant la conjugaison du polymère obtenu à l'étape (b1) à l'acide polycarboxylique.

**14.** Procédé selon la revendication 12 ou 13, dans lequel :

(a) le substrat est choisi parmi des particules, des filtres creux, des tubes en plastique, des fibres de verre, des lames de verre, des microplaques et des dispositifs microfluidiques, (par ex. le substrat est choisi parmi des particules, des filtres creux, des microplaques et des dispositifs microfluidiques) ; et/ou
(b) le matériau du substrat est choisi parmi des matériaux polymères, organiques ou composites, tels que : polyuréthanes, polyacrylonitriles, polyméthacrylate, fibres de carbone, matériaux cellulosiques, polyacrylamide,

polyacrylate, polyoléfines, poly(4-méthylbutène), polystyrène, poly(éthylène téréphtalate), polysiloxanes, nylon, butyrate de polyvinyle, matériaux ferromagnétiques, silice ou des mélanges ou composites de l'un quelconque des matériaux qui précèdent ; et/ou
(c) le substrat est fonctionnalisé par un ou plusieurs éléments du groupe constitué de : une amine primaire, un groupe époxyde, un groupe tosyle et un groupe aldéhyde ; le substrat étant facultativement fonctionnalisé par une amine primaire.

**15.** Substrat comprenant le copolymère réticulé soluble dans l'eau selon l'une quelconque des revendications 1 à 10.

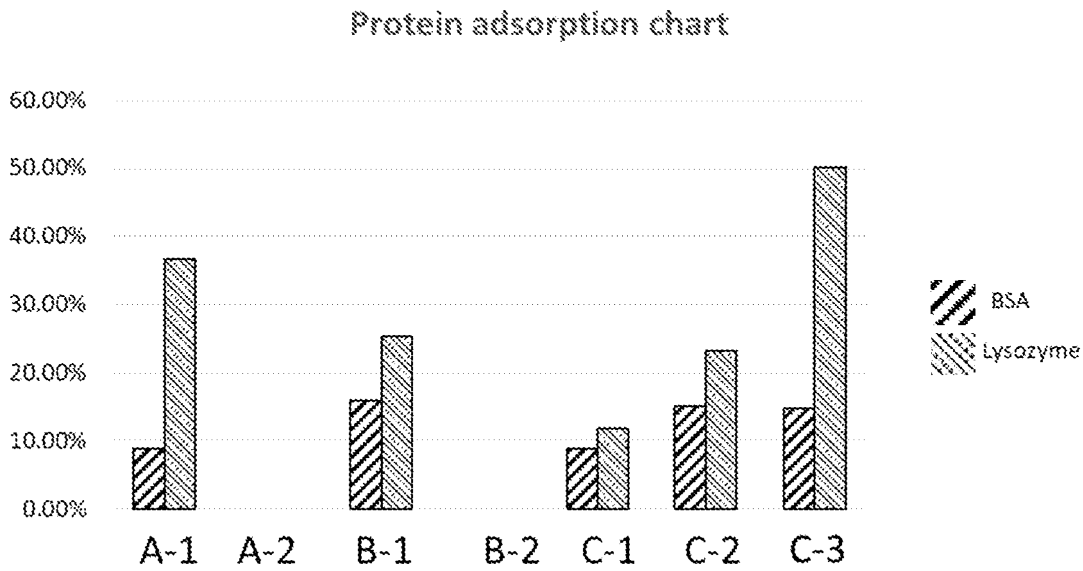
Protein adsorption chart
60.00%
50.00%
40.00%
30.00%
20.00%
10.00%
0.00%
A-1
A-2
B-1
B-2
C-1
C-2
C-3
BSA
Lysozyme

Figure 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5103831 A
- JP 2006177914 A
- JP 2006299045 A
- JP 2006176720 A
- JP 2006258585 A
- JP H0783923 A
- EP 3467059 A1
- EP 2230515 A1